# EUROPÄISCHE PATENTANMELDUNG

(11) **EP 0 634 824 A1**
(43) Veröffentlichungstag der Anmeldung: **18.01.1995**
(21) Anmeldenummer: 94109059.9
(22) Anmeldetag: 14.06.1994
(51) Int. Cl.: H02G 3/04, A62C 35/58

(54) **Löscheinrichtung für Kabelführungen**

(30) Priorität: 15.07.1993 DE 4323729
(71) Anmelder: Minimax GmbH, D-23843 Bad Oldesloe (DE)
(72) Erfinder: Donner, Hartmut, D-23843 Bad Oldesloe (DE)
(74) Vertreter: Drömer, Hans-Carsten

(57) **Zusammenfassung**

Die Erfindung betrifft eine Löscheinrichtung für Kabelführungen, insbesondere für Kabelkanäle und Kabelböden. Löscheinrichtungen für Kabelführungen werden bisher in Form fest installierter Löschmittelführungen (Rohren) und einer Vielzahl fest installierter Anschlußstellen zur Abgabe von Löschmittel (Düsen) versehen. Hierdurch ist eine Anpassung an Änderungen der Kabelführung nur mit hohem Aufwand möglich. Die Erfindung sieht vor, wenigstens einen Teil der Anschlußstellen als Zapfstellen auszubilden. Unter Zapfstelle soll ein normalerweise geschlossener Abgang verstanden werden, der bei Bedarf beliebig aktiviert werden kann. Nach der Erfindung können daher nachträglich weitere Verbindungs-/Löschmittelleitungen oder auch Direktdüsen vorgesehen sein.

## Beschreibung

Die Erfindung betrifft eine Löscheinrichtung für Kabelführungen, insbesondere für Kabelkanäle und Kabelböden.

Es ist z. B. aus DE 23 63 560 bekannt, daß die nachträgliche Anbringung von Rohren als Löschmittelführung in Einrichtungen zur Kabelführung, wie z. B. Kabelkanäle, zeitaufwendig und kostspielig ist. In DE 23 63 560 wird vorgeschlagen, das Löschmittel in konstruktiven Elementen der Kabelführung selbst zu führen. Bei den dort dargestellten Kabelkanälen ist in diesen ein Hohlraum angebracht, der als Löschmittelführung dient. Diese Maßnahme eignet sich nicht für modular aufgebaute Kabelführungen, die aus zahlreichen einzelnen Elementen (Modulen) bestehen, da hierbei die Dichtung zwischen den Modulen sich schwierig und aufwendig gestaltet. Insbesondere bei flächig ausgebildeten Kabelführungen, wie Kabelböden, kann auf die vorgeschlagene Weise eine Löscheinrichtung nicht aufgebaut werden. Zudem ergibt sich häufig, speziell bei Kabelböden, das Problem, die Löscheinrichtung an geänderte Kabelführungen anzupassen.

Aufgabe der Erfindung war es daher, eine möglichst flexible Löscheinrichtung für Kabelführungen zu schaffen.

Diese Aufgabe wird gelöst durch die kennzeichnenden Merkmale des Patentanspruchs 1. Die Ansprüche 2 bis 9 geben weitere erfindungsgemäße Gestaltungen an.

Bei der erfindungsgemäßen Löscheinrichtung für Kabelführungen mit installierten Löschmittelführungen und einer Vielzahl Anschlußstellen zur Abgabe von Löschmittel ist vorgesehen, wenigstens einen Teil der Anschlußstellen als Zapfstellen für nachträglich verbindbare Löschmittelführungen auszubilden. Eine derartige Löscheinrichtung besteht beispielsweise aus Rohrleitungen für die Löschmittelführung, welche Düsen als Anschlußstellen zur Abgabe von Löschmittel aufweisen. Die Rohrleitungen sind so dimensioniert, daß an jeder der Anschlußstellen bzw. Zapfstellen annähernd gleiche Mengen bei etwa gleichem Druck (Vordruck an der Zapfstelle) abgegegen werden können. Zusätzlich zu den vorgesehenen Düsen sind weitere Anschlußstellen vorgesehen, die zunächst nicht mit Düsen versehen sind, sondern als Zapfstellen fungieren, so daß dort nachträglich weitere Verbindungs-/Löchmittelleitungen oder auch direkt Düsen vorgesehen sein können. Unter Zapfstelle soll ein normalerweise geschlossener Abgang verstanden werden, der bei Bedarf beliebig aktiviert werden kann. Bei einer derartigen Löscheinrichtung können insbesondere auch alle Anschlußstellen als Zapfstellen ausgerüstet sein, so daß der Einbau von Düsen erst erfolgt, wenn die Kabelführung festliegt. Ein weiterer Vorteil der erfindungsgemäßen Löscheinrichtung ist, daß von den Zapfstellen aus auch weitere Löscheinrichtungen versorgt werden, die nicht unmittelbar zur Brandlöschung in der Kabelführung dienen, sondern mit denen z. B. Löscheinrichtungen an EDV-Geräten (durchgängig), welche z.B. auf einem Kabelboden stehen, versorgt werden können. Ein besonderer Vorteil für diese Anwendung ist, daß jederzeit, auch bei zukünftigen Änderungen in der Geräteaufstellung und/oder Geräteart ein einfacher und wirksamer Anschluß an das Löschsystem gegeben ist.

In einer bevorzugten Ausführung sind die Zapfstellen gegenüber den Löschmittelführungen absperrbar ausgebildet, so daß ein Austausch von weiteren Löschmittelführungen oder auch Einrichtungen zur Abgabe von Löschmittel flexibel ermöglicht wird. Dies wird besonders vorteilhaft erreicht, wenn die Zapfstellen mit Einrichtungen zur selektiven Steuerung der Löschmittelabgabe an Geräte/Gerätegruppen, in denen ein Brand detektiert wurde, ausgestattet ist.

Nach einer weiteren bevorzugten Ausführung sind die Löschmittelführungen als Rohrstrang bzw. Rohrstränge ausgebildet, wobei die Zapfstellen insbesondere äquidistant angeordnet sind. Bei Verwendung von mehreren Rohrsträngen sind auch diese im wesentlichen äquidistant ausgeführt. Vorteil hierbei ist, daß besonders bei zu ändernden Installationen durch das festgelegte Raster die dem gewünschten Ort der Löschmittelabgabe jeweils nächstliegende Zapfstelle sich gut auffinden läßt.

Nach einer weiteren bevorzugten Ausführung ist an jeder Löschmittelführung bzw. an jedem Rohrstrang von der Vielzahl der Anschlußstellen jeweils eine abwechselnd als Anschlußstelle zur Abgabe von Löschmittel und Zapfstelle ausgebildet. Hierdurch wird erreicht, daß einerseits bei Bedarf das Raster zur Abgabe von Löschmittel in einfacher Weise an einen geänderten Bedarf bei der Einwirkzone von Löschmittel angepaßt werden kann. Andererseits ergibt sich ein besonders einfacher Aufbau, wenn zusätzlich zum Brandschutz im Kabelboden der Objektschutz von EDV-Geräten ins Auge gefaßt wird.

Nach einer weiter bevorzugten Ausführung sind nebeneinander mehrere Rohrstränge vorgesehen, wobei abwechselnd Rohrstränge mit ausschließlich Zapfstellen neben Rohrsträngen mit ausschließlich anderen Anschlußstellen angeordnet sind. Dies hat den Vorteil, daß getrennte Rohrleitungskreisläufe aufgebaut werden können.

In einer weiter bevorzugten Ausführung ist vorgesehen, daß für die Zapfstellen eine von den übrigen Anschlußstellen getrennte Löschmittelversorgung angeordnet ist. Hierdurch können verschiedene Flutzeiten für geschützte Löschbereiche oder angeschlossene Geräte realisert werden, außerdem ergibt sich eine erhöhte Sicherheit, weil mindestens zwei redundante Kreisläufe für die Löscheinrichtung vorgesehen sind. Die redundante Ausführung kann übrigens vorteilhafterweise auch für solche Löscheinrichtungen verwendet werden, bei denen an jedem einzelnen Rohrstrang abwechselnd Zapf- und andere Anschlußstellen angeordnet sind. Hierbei werden die Rohrstränge der benachbarten redundanten Teilkreisläufe bevorzugt so angeordnet, daß die Anschlußstellen eines Stranges jeweils auf halber Höhe zwischen den Anschlußstellen des anderen Stranges liegen.

Nach einer weiteren bevorzugten Ausführung sind die Rohrstränge untereinander verbunden. Bei redundant angeordneten Kreisläufen der Löscheinrichtung erstreckt sich die Verbindung nur auf den jeweiligen Kreislauf. Durch die Verbindung der Rohrstränge untereinander (Vermaschung) ergibt sich eine höhere Löschsicherheit und höhere Gleichförmigkeit der Löschmittelabgabe weil die Vordrücke an den einzelnen Zapfstellen ausgeglichen werden.

Besonders bevorzugt ist eine Ausführung, bei der die Rohrstränge wenigstens an einem Ende durch eine Hauptzuleitung verbunden sind. Bei den redundanten Systemen bezieht sich dies auf den jeweiligen Kreislauf. Hierdurch wird der Installationsaufwand für die Rohrnetze verringert.

Speziell sind zusätzlich zu der Hauptzuleitung weitere Verbindungsrohre vorgesehen.

Ohne Beschränkung auf weitere nach den Ansprüchen geschützte Ausführungsformen wird die Erfindung anhand eines Ausführungsbeispiels erläutert. Es zeigt:

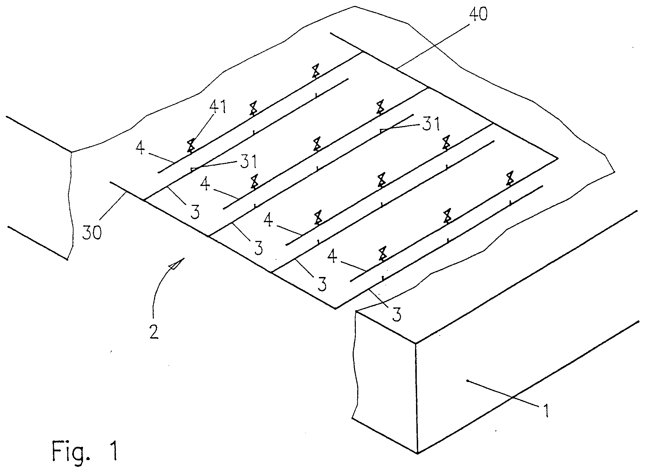

- Fig. 1: einen Ausschnitt aus einem Kabelboden mit redundant aufgebauter Löscheinrichtung.

Nach Figur 1 ist in einem Kabelboden 1 ein Beispiel für eine erfindungsgemäße Löscheinrichtung 2 dargestellt. Die Löscheinrichtung 2 besteht aus Rohrsträngen 3, 4, die über Löschmittelversorgungsleitungen 30, 40 verbunden sind. An den Rohrsträngen 3 sind Anschlüsse zur Abgabe von Löschmittel 31 vorgesehen. An den Rohrsträngen 4 sind Zapfstellen 41 angeordnet. Die Zapfstellen 41 sind bevorzugt absperrbar, z.B. Rückschlagventil, Schnellkupplung, ausgeführt. Die Leitungen 30, 40 für die Zufuhr von Löschmitteln sind mit Löschmittelvorratsbehältern verbunden (in der Zeichnung nicht dargestellt). Die Zapfstellen 41, die insbesondere zur Verbindung mit Einrichtungen zum Objektschutz dienen, sind etwa auf halbem Abstand zwischen benachbarten Anschlüssen 31 angeordnet. Die beiden Rohrstrangsysteme 3, 30 und 4, 40 lassen sich auf diese Weise, bis auf Anschluß- und Endstücke, an den Löschmittelzuführungsleitungen 30, 40 identisch aufbauen, wodurch der Fertigungsaufwand verringert wird.

## Patentansprüche

1. Löscheinrichtung für Kabelführungen mit wenigstens einer Löschmittelversorgung, mit installierten Löschmittelführungen und einer Vielzahl von Anschlußstellen zur Abgabe von Löschmittel dadurch gekennzeichnet, daß
wenigstens ein Teil der Anschlußstellen als Zapfstellen ausgebildet sind.

2. Löscheinrichtung nach Anspruch 1
dadurch gekennzeichnet, daß
die Zapfstellen absperrbar ausgebildet sind.

3. Löscheinrichtung nach Anspruch 1 oder 2
dadurch gekennzeichnet, daß
die Löschmittelführungen als Rohrstrang ausgebildet sind, wobei die Zapfstellen, insbesondere im wesentlichen äquidistant, an den Rohrsträngen angeordnet sind.

4. Löscheinrichtung nach Anspruch 3
dadurch gekennzeichnet, daß
an einem Rohrstrang Zapfstellen, abwechselnd mit anderen Anschlußstellen, ausgebildet sind.

5. Löscheinrichtung nach Anspruch 4
dadurch gekennzeichnet, daß
Rohrstränge mit Zapfstellen, abwechselnd mit Rohrsträngen mit anderen Anschlußstellen, angeordnet sind.

6. Löscheinrichtung nach Anspruch 5
dadurch gekennzeichnet, daß
für die Zapfstellen eine von den übrigen Anschlußstellen getrennte Löschmittelversorgung angeordnet ist.

7. Löscheinrichtung nach einem der Ansprüche 3 bis 6
dadurch gekennzeichnet, daß
die Rohrstränge untereinander verbunden sind.

8. Löscheinrichtung nach Anspruch 7
dadurch gekennzeichnet, daß
die Rohrstränge wenigstens an einem Ende durch eine Hauptzuleitung verbunden sind.

9. Löscheinrichtung nach Anspruch 8
dadurch gekennzeichnet, daß
die Rohrstränge durch zusätzliche Verbindungsrohre vermascht sind.
